# EUROPEAN PATENT SPECIFICATION

(11) **EP 0 653 011 B1**
(45) Date of publication and mention of the grant of the patent: **03.12.1997**
(21) Application number: 93913211.4
(22) Date of filing: 27.05.1993
(51) Int. Cl.: E05B 67/36, E05B 67/38, B60R 25/00

(54) **LOCK DEVICE**
SCHLIESSVORRICHTUNG
DISPOSITIF DE VERROUILLAGE

(30) Priority: 21.07.1992 GB 9215463; 03.04.1993 GB 9307220
(43) Date of publication of application: 17.05.1995
(73) Proprietor: FILLINGHAM, Andrew, John, South Humberside DN20 0NP (GB)
(72) Inventor: FILLINGHAM, Andrew, John, South Humberside DN20 0NP (GB)
(74) Representative: Vinsome, Rex Martin
(86) International application number: GB9301103
(87) International publication number: WO9402703

(56) References cited:
- WO-A-91/10799
- GB-A- 2 233 036
- US-A- 2 641 124
- US-A- 3 751 948
- US-A- 3 884 057
- US-A- 4 175 410
- US-A- 4 372 136
- US-A- 4 538 827
- US-A- 4 841 756

## Description

This invention relates to a lock device and to objects with which the lock device can be used.

A padlock comprises a hasp, and a body which contains a lock mechanism and which has two openings formed in it for receiving the ends of the hasp which can be retained in the openings by the lock mechanism when the padlock is in a locked condition. Such locks are particularly vulnerable to attack by damage to the hasp, for example using bolt cutters or a saw.

US-4883294 discloses a locking device in which a padlock is retain in an enclosure. The enclosure has openings in its walls through which a deadbolt can pass. The deadbolt has a notch formed in it for receiving the body of a padlock when the padlock is in its locked condition. When in this condition, the deadbolt cannot be slid out of the housing.

The device disclosed in US-4883294 has the disadvantage that force applied to the deadbolt relative to the enclosure can damage the padlock, making it difficult then to release the deadbolt from the enclosure.

The lock device of US-A-4538827, which is considered to be the closest prior art, has the advantage that, in the event that force is applied to the pin element relative to the casing to damage the lock, the component of the lock that is damaged is the hasp rather than the body with the locking mechanism inside. This can mean that the locking mechanism can still function after the damage.

The object of the present invention is thereby to provide a lock device, which is easy to use, and which increases the security.

Accordingly, in one aspect, the invention provides a lock device according to claim 1.

A significant advantage of the device according to the invention is that, by appropriate selection of the pin element and the lock, the lock in its protective casing can be allowed to rotate around the pin element. This can facilitate closing of the lock since the hasp can be made to drop into and out of the body of the lock under force of gravity, according to the orientation of the lock.

Either or both of the arms may be released entirely from the openings, for example for rotation of the hasp relative to the body. In many situations, however, the arms of the hasp will move in directions into and out of the lock body, while not necessarily moving entirely out of the body. The hasp comprises two generally parallel arms, joined by a base portion, and frequently will be generally U-shaped.

With the pin element approximately circular in cross-section and the hasp comprising two generally parallel limbs joined by a generally rounded base portion, according to the invention, the protective casing can rotate around the pin element to achieve the advantageous results referred to above.

Preferably, the casing has a single pin element opening formed in it so that the free end of the pin element cannot pass through the casing. This has the significant advantage that access is denied to the free end of the pin element to interfere with the lock and the engagement between the lock and the pin element; for example, force cannot be applied to the free end of the pin element relative to the protective casing to force the pin element out of the casing.

The casing may be formed from a number of components which can be fastened to one another, for example by welding or by use of fasteners. Preferably, the casing is formed from a block of material, for example by casting or by removal of material from the block to provide the opening and the compartment.

Preferably, the lock is retained in the compartment by retaining means. For example, a screw may be provided extending through the protective casing to engage the lock body.

Preferably, the recess is spaced from the end of the pin element. In this event, it can be appropriate for the side faces of the pin element to be trimmed, for example by creation of flats, to allow the side portions to pass through the hasp, between the arms thereof, when the hasp is released from the lock body.

It can be preferred for the recess to be provided by a groove defined axially of the pin element by two spaced apart axially facing surfaces. This ensures that the lock is positively located on the pin element, in both directions along the pin element.

The pin element can have a plurality of recesses formed in it for receiving the hasp extending around at least part of its periphery, so that the pin element can be engaged by the hasp of the lock in a number of different positions.

The lock device of the invention can be used to immobilise a wheel. Accordingly, in another aspect, the invention relates to the use of a lock device of the type discussed above, for immobilising a wheel, whereby the wheel has an aperture extending through it, and in which the pin element extends through the said opening, one end of the pin element being engaged by the lock with the associated protective casing, and the other end of the pin element projecting radially beyond the outermost point of the wheel and any tyre provided on it.

The pin element may include a cross-piece at the end which projects radially beyond the outermost point of the wheel and any tyre on it, to prevent the pin element from being forced below that outermost point.

The lock device of the invention can be used to lock two objects to one another which otherwise might be movable relative to one another. Accordingly, in another aspect, the invention relates to the use of a lock device of the type discussed above for use with a pair of objects which are movable relative to one another, which are locked to one another so as to restrict such relative movement by means of a lock device of the type discussed above, the pin element being connected to one of the objects, and the protective casing being connected to the other of the objects.

Such objects which might be locked together might include, for example, a pair of sliding doors, a single sliding door with its frame, a hinged door or window, and so on.

Embodiments of the present invention will now be described, by way of example, with reference to the accompanying drawings, in which:
Figure 1 is a front view of a lock shown partially in cross-section;
Figure 2 shows a vertical cross-section through one side of the lock on the line II-II' in Figure 1;
Figure 3 is a side view of a pin element for engaging the lock shown in Figures 1 and 2;
Figure 4 is a front view of the pin element shown in Figure 3;
Figure 5 is an exploded isometric view of a lock device;
Figure 6 is a schematic cross-sectional view through a vehicle wheel to which a lock device according to the invention has been fitted;
Figure 7 is a cross-sectional view of two movable objects which have been fastened to one another by means of a lock device;
Figure 8 is a plan view of a sliding door which is locked in the closed position by means of a lock device according to the invention.

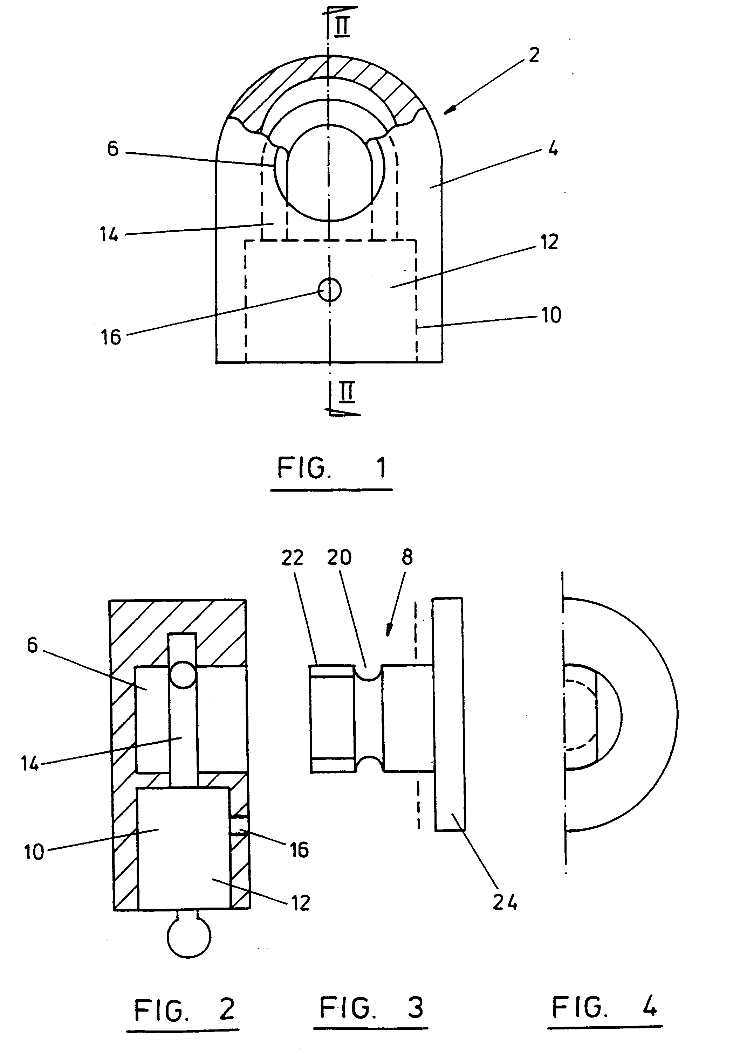

Referring to the drawings, Figure 1 shows a lock device 2 which comprises a protective casing 4 that is formed from a solid block of material, for example a metal such as stainless steel, by machining. The casing has a recess 6 for receiving the free end of a pin element 8. The casing also has a compartment 10 for receiving the body portion of a lock 12.

The lock 12 comprises a body portion which fits into the compartment 10 in the protective casing. The lock further includes a U-shaped hasp 14. The hasp comprises two arms which are received, and slide in directions into and out of two openings in the upper surface of the body of the lock 12.

The body of the lock is retained in the compartment 10 in the protective casing 4 by means of a screw 16, which passes through a wall of the protective casing and engages the body of the lock.

The pin element 8 is formed as an elongate rod, and is attached to an object 24, such as a flange or a door. It has a recess 20 formed in it, which extends around the circumference of the pin. The pin is circular in cross-section.

The portion of the pin between the recess 20 and the free end 22 has flattened side walls, so that that portion of the pin can fit between the two arms of the hasp 14.

To fit the lock, the protective casing 4 with its associated lock 12 are inverted from the position shown in Figure 1 with the mechanism of the lock in an unlocked condition. This allows the hasp 14 to drop out of the lock body.

The free end 22 of the pin element 8 is then inserted into the lock body so that the free end of the pin element engages the closed end wall of the pin element opening 6. The pin element is able to pass the arms of the hasps because of the flattened portions of its side walls.

The protective casing 4 with its associated lock is then rotated again to the position shown in Figure 1. This allows the hasp 14 to drop over the pin element 8, into the openings in the lock body. The hasp can be retained in the lock body, for example by means of a key-operated mechanism as considered appropriate.

The lock device is released by reversing the procedure described above.

The flange 24 to which the pin element is connected can be seen from Figures 2 and 3 to cover the screw 16 by which the lock is retained in the compartment 10.

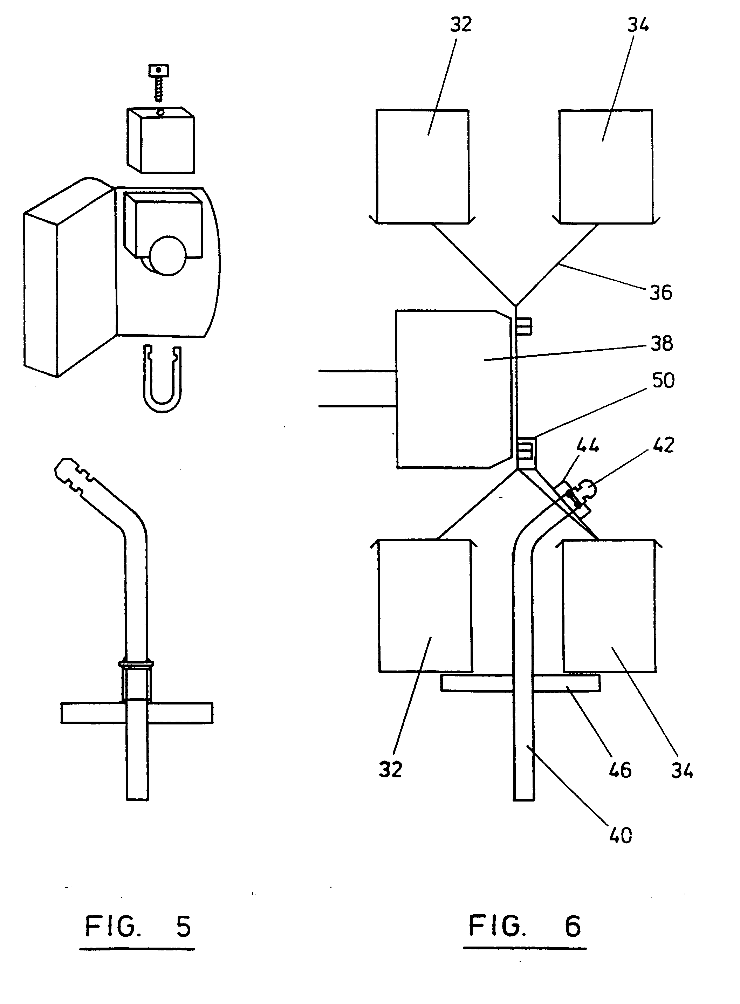

Figure 5 shows a lock device similar to that shown in Figures 1 and 2, in which the protective casing is made from material in sheet form.

Figure 6 shows a tandem wheel such as is used on commercial vehicles. Two tyres 32, 34 are mounted on the wheel 36, which is mounted on a hub 38.

The pin element 40 is inserted between the tyres, and one end 42 protrudes through a hole in the wheel. It is engaged there by means of a lock 44 with an associated protective casing, of the type discussed above.

The pin element has a cross piece 46 towards its other end 48, which rests against the tyres 32, 34 on the wheel 36.

A nut cover 50 is provided to prevent tampering with the nuts by which the wheel is fastened to the hub. The nut cover is also held in place by means of the lock 44.

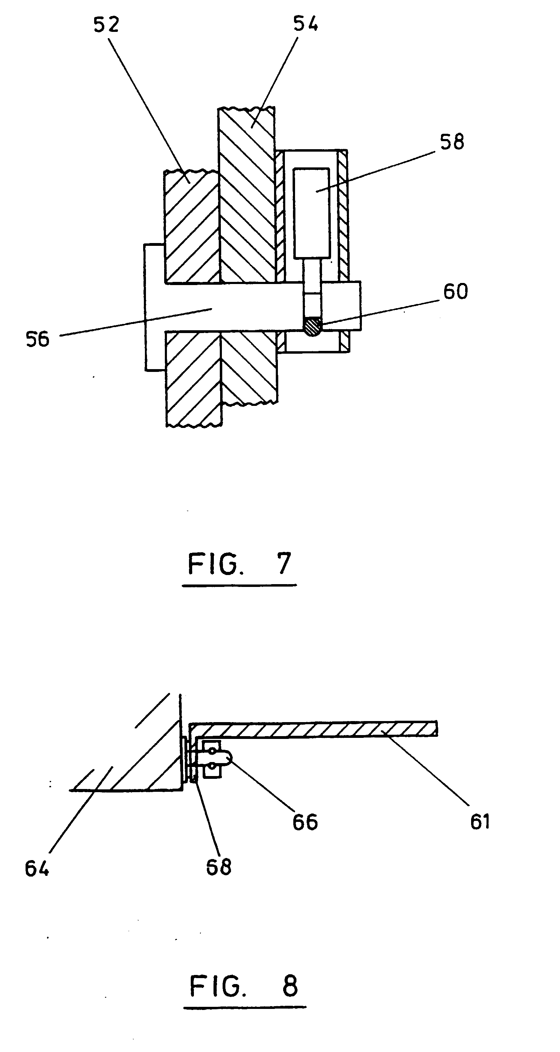

Figure 7 shows two moveable elements 52, 54, which might be, for example, two interior doors, one door and its frame, and so on. Each of the objects 52, 54 has a hole formed in it for receiving a pin element 56. A lock 58, with its associated protective casing, engages a recess 60 formed in the pin element.

Figure 8 shows a sliding door 61 which, when closed, abuts a wall 64. A pin element 66 is fastened to the wall, and the door bears an apertured plate 68, in which the aperture can receive the pin element 66. The pin element has a circumferentially extending groove formed in it, which can be engaged by a lock with an associated protective casing, of the type discussed generally above.

## Claims

1. A lock device which comprises:
(a) a lock (12) comprising a hasp (14), having two generally parallel limbs joined by a rounded base portion, and a body which contains a lock mechanism and which has two openings formed in it for receiving the ends of the hasp (14), which can be retained in the openings by the lock mechanism (12) when the lock (12) is in a locked condition;
(b) a pin element (8, 40, 56, 66) which has at least one recess (20) formed therein for reception of the hasp (14) in it ;
(c) a protective casing (4) which has at least one pin element opening (6) through which the pin element (8, 40, 56, 66) can be inserted into the casing (4), and a compartment in which the lock (12) can be located, the pin element opening (6) and the compartment being so aligned that the hasp (14) on the lock can engage the recess (20) in the pin element (8, 40, 56, 66) when it is inserted into the casing (4) and so prevent withdrawal of the pin element (8, 40, 56, 66) from the casing (4), wherein the body portion of the lock (12) is adapted to fit into the compartment (10) of the casing (4) such that the body portion of the lock (12) is removably retained in the casing (4) ;
characterised in that the recess (20) extends substantially around the entire periphery of the pin element (8, 40, 56, 66) and is adapted to be engaged by the hasp (14) at least on substantially opposite sides of the pin element.

2. A lock device as claimed in claim 1, in which the pin element (8, 40, 56, 66) is approximately circular in cross-section.

3. A lock device as claimed in claim 1 or claim 2, in which the casing (4) has a single pin element opening (6) formed in it so that the free end of the pin element (8, 40, 56, 66) cannot pass through the casing (4).

4. A lock device as claimed in any one of claims 1 to 3, in which the casing (4) is formed from a block of material.

5. A lock device as claimed in any one of claims 1 to 4, in which the lock (12) is retained in the compartment by retaining means (16).

6. A lock device as claimed in any one of claims 1 to 5, in which the recess (20,60) is spaced from the end of the pin element (8,40,56,66).

7. A lock device as claimed in any one of claims 1 to 6, in which the recess (20) is a groove defined axially of the pin element (8,66) by two spaced apart axially facing surfaces.

8. A lock device as claimed in any one of claims 1 to 7, in which the pin element (8) has a plurality of recesses (20) formed in it each recess (20) of the pine element (8) extending around at least part of its periphery.

9. The use of locking device as claimed in any one of claims 1 to 8, for immobilising a wheel (36), the wheel (36) having an aperture extending through it, and in which the pin element (40) extends through the said opening, one end (42) of the pin element (40) being engaged by the lock (44) with the associated protective casing, and the other end of the pin element (40) projecting radially beyond the outermost point of the wheel (36) and any tyre (32,34) provided on it.

10. The use of a locking device as claimed in any one of claims 1 to 8 for use with a pair of objects (52,54) which are movable relative to one another and which are locked to one another so as to restrict such relative movement and wherein the pin element is connected to one of the objects (52,54), and the protective casing is connected to the other of the objects.

11. The use of a locking device as claimed in claim 10, in which the lock (58) is retained in the compartment by a retaining device, the retaining device being made inaccessible by one or both of the objects (52,54) when they are locked to one another.

## Patentansprüche

1. Schließvorrichtung, die umfaßt:
a) ein Schloß (12) mit einem Schließbügel (14), der zwei im wesentlichen parallele Schenkel aufweist, die durch einen abgerundeten Basisabschnitt miteinander verbunden sind, sowie ein Gehäuse, welches einen Schließmechanismus enthält und zwei in ihm ausgebildete Öffnungen aufweist, welche die Enden des Schließbügels (14) aufnehmen, die durch das Schloß (12) in den Öffnungen festgehalten werden können, wenn das Schloß (12) verriegelt ist;
b) einen Stift (8, 40, 56, 66), an dem mindestens ein Rücksprung (20) ausgebildet ist, welcher zur Aufnahme des Schließbügels (14) bestimmt ist;
c) ein Schutzgehäuse (4), welches mindestens eine Stiftöffnung (6) aufweist, durch welche der Stift (8, 40, 56, 66) in das Schutzgehäuse (4) eingeführt werden kann, sowie eine Kammer, in welcher das Schloß (12) untergebracht werden kann, wobei die Stiftöffnung (6) und die Kammer so aufeinander ausgerichtet sind, daß der Schließbügel (14) am Schloß in den Rücksprung (20) des Stifts (8, 40, 56, 66) eingreifen kann, wenn er in das Schutzgehäuse (4) eingeführt wird, und so ein Rückziehen des Stiftes (8, 40, 56, 66) aus dem Schutzgehäuse (4) verhindert, wobei das Gehäuse des Schlosses (12) so ausgebildet ist, daß es in einer Weise in die Kammer (10) des Schutzgehäuses (4) paßt, daß das Gehäuse des Schlosses (12) entfernbar in dem Schutzgehäuse (4) gehalten ist;
dadurch gekennzeichnet, daß der Rücksprung (20) im wesentlichen um den gesamten Umfang des Stiftes (8, 40, 56, 66) herum verläuft und so eingerichtet ist, daß der Schließbügel (14) zumindest auf im wesentlichen einander gegenüberliegenden Seiten des Stiftes in diesen eingreifen kann.

2. Schließvorrichtung nach Anspruch 1, bei welcher der Stift (8, 40, 56, 66) im Querschnitt annähernd kreisförmig ist.

3. Schließvorrichtung nach Anspruch 1 oder 2, bei welcher in dem Schutzgehäuse (4) eine einzige Stiftöffnung (6) ausgebildet ist, derart, daß das freie Ende des Stifts (8, 50, 56, 66) nicht durch das Schutzgehäuse (4) hindurchgeschoben werden kann.

4. Schließvorrichtung nach einem der Ansprüche 1 bis 3, bei welcher das Schutzgehäuse (4) aus einem Materialblock hergestellt ist.

5. Schließvorrichtung nach einem der Ansprüche 1 bis 4, bei welcher das Schloß (12) in der Kammer durch eine Halteeinrichtung (16) festgehalten ist.

6. Schließvorrichtung nach einem der Ansprüche 1 bis 5, bei welcher der Rücksprung (20, 60) einen Abstand vom Ende des Stiftes (8, 40, 56, 66) aufweist.

7. Schließvorrichtung nach einem der Ansprüche 1 bis 6, bei welcher der Rücksprung (20) eine Nut ist, die in Axialrichtung des Stiftes (8, 66) durch zwei in Abstand voneinander befindliche, in axialer Richtung zeigende Flächen begrenzt ist.

8. Schließvorrichtung nach einem der Ansprüche 1 bis 7, bei welcher in dem Stift (8) eine Mehrzahl von Rücksprüngen (20) ausgebildet ist, wobei jeder Rücksprung (20) des Stifts (8) zumindest teilweise um dessen Umfang herum verläuft.

9. Verwendung einer Schließvorrichtung nach einem der Ansprüche 1 bis 8 zur Immobilisierung eines Rades (36), durch welches eine Öffnung hindurch verläuft, wobei der Stift (40) sich durch die Öffnung hindurch erstreckt und ein Ende (42) des Stifts (40) in Eingriff mit dem Schloß (44) mit dem zugeordneten Schutzgehäuse steht und das andere Ende des Stifts (40) radial über den äußersten Punkt des Rades (36) und an diesem vorgesehener Reifen (32, 34) hinausragt.

10. Verwendung einer Schließvorrichtung nach einem der Ansprüche 1 bis 8 bei einem Paar von Gegenständen (52, 54), die relativ zueinander beweglich sind und derart aneinander verriegelt sind, daß diese Relativbewegung begrenzt ist, wobei der Stift mit einem der Gegenstände (52, 54) verbunden ist und das Schutzgehäuse mit dem anderen der Gegenstände verbunden ist.

11. Verwendung einer Schließvorrichtung nach Anspruch 10, bei welcher das Schloß (58) durch eine Haltevorrichtung in der Kammer festgehalten wird, welche durch eines oder beide Objekte (52, 54) unzugänglich gemacht ist, wenn die Objekte aneinander verriegelt sind.

## Revendications

1. Dispositif de verrouillage qui comprend:
(a) un verrou (12) comprenant un moraillon (14), ayant deux branches globalement parallèles reliées par une partie de base arrondie, et un corps qui contient un mécanisme de verrouillage et qui comporte deux ouvertures destinées à recevoir les extrémités du moraillon (14) lorsque le verrou (12) est en position verrouillée ;
(b) un élément d'axe (8, 40, 56, 66) qui comporte au moins une dépression (20) formée dans celui-ci pour recevoir le moraillon (14) ;
(c) un boîtier de protection (4) qui comporte au moins une ouverture (6) pour l'élément d'axe, au travers de laquelle l'élément d'axe (8, 40, 56, 66) peut être inséré dans le boîtier (4), et un compartiment dans lequel le verrou (12) peut être placé, l'ouverture (6) pour l'élément d'axe et le compartiment étant alignés de telle sorte que le moraillon (14) du verrou peut venir en prise avec la dépression (20) de l'élément d'axe (8, 40, 56, 66) lorsqu'il est inséré dans le boîtier (4), et empêche ainsi le retrait de l'élément d'axe (8, 40, 56, 66) du boîtier (4), dans lequel la partie formant corps du verrou (12) est agencée de manière à s'ajuster dans le compartiment (10) du boîtier (4) de sorte que la partie formant corps du verrou (12) est retenue de manière amovible dans le boîtier 4) ;
caractérisé en ce que la dépression (20) s'étend sensiblement autour de toute la périphérie de l'élément d'axe (8, 40, 56, 66) et est agencée pour venir en prise avec le moraillon (14) au moins sur des côtés sensiblement opposés de l'élément d'axe.

2. Dispositif de verrouillage selon la revendication 1, dans lequel l'élément d'axe (8, 40, 56, 66) a une section transversale sensiblement circulaire.

3. Dispositif de verrouillage selon la revendication 1 ou la revendication 2, dans lequel le boîtier (4) comporte une ouverture (6) pour élément d'axe simple, formée dans celui-ci de sorte que l'extrémité libre de l'élément d'axe (8, 40, 56, 66) ne peut pas passer au travers du boîtier (4).

4. Dispositif de verrouillage selon l'une quelconque des revendications 1 à 3, dans lequel le boîtier (4) est réalisé à partir d'un bloc de matière.

5. Dispositif de verrouillage selon l'une quelconque des revendications 1 à 4, dans lequel le verrou (12) est retenu dans le compartiment par des moyens de retenue (16).

6. Dispositif de verrouillage selon l'une quelconque des revendications 1 à 5, dans lequel la dépression (20, 60) est espacée de l'extrémité de l'élément d'axe (8, 40, 56, 66).

7. Dispositif de verrouillage selon l'une quelconque des revendications 1 à 6, dans lequel la dépression (20) est une gorge définie dans l'axe de l'élément d'axe (8, 66) par deux surfaces se faisant face espacées l'une de l'autre de manière axiale.

8. Dispositif de verrouillage selon l'une quelconque des revendications 1 à 7, dans lequel l'élément d'axe 8 comporte une pluralité de dépressions (20) formées dans chaque dépression (20) de l'élément d'axe (8) s'étendant autour d'au moins une partie de sa périphérie.

9. Utilisation du dispositif de verrouillage selon l'une quelconque des revendications 1 à 8, pour immobiliser une roue (36), la roue (36) comportant une ouverture s'étendant au travers de celle-ci, et dans laquelle l'élément d'axe (40) s'étend au travers de ladite ouverture, une extrémité (42) de l'élément d'axe (40) se trouvant en prise, par le verrou (44), avec le boîtier de protection qui lui est associé, et l'autre extrémité de l'élément d'axe (40) faisant saillie de manière radiale, au-delà du point le plus à l'extérieur de la roue (36) et de tout pneumatique (32, 34) monté sur celle-ci.

10. Utilisation d'un dispositif de verrouillage selon l'une quelconque des revendications 1 à 8 pour utilisation avec une paire d'objets (52, 54) qui sont susceptibles d'être déplacés l'un par rapport à l'autre et qui sont verrouillés l'un avec l'autre de manière à restreindre ledit mouvement relatif, et dans laquelle l'élément d'axe est raccordé aux objets (52, 54) et le boîtier de protection est raccordé à l'autre des objets.

11. Utilisation d'un dispositif de verrouillage selon la revendication 10, dans lequel le verrou (58) est retenu dans le compartiment au moyen d'un dispositif de retenue, le dispositif de retenue étant rendu inaccessible par l'un ou les deux des objets (52, 54) lorsqu'il sont verrouillés ensemble.
